# EUROPEAN PATENT SPECIFICATION

(11) **EP 0 534 332 B1**
(45) Date of publication and mention of the grant of the patent: **08.03.2000**
(21) Application number: 92116047.9
(22) Date of filing: 19.09.1992
(51) Int. Cl.: B62D 5/06, B62D 6/00

(54) **Hydraulic servo unit, primarily for the steering mechanism of a vehicle**
Hydraulische Servoeinheit, insbesondere für den Lenkmechanismus eines Kraftfahrzeuges
Servomécanisme hydraulique, particulièrement pour le mécanisme de direction d'un véhicule

(30) Priority: 26.09.1991 SE 9102795
(43) Date of publication of application: 31.03.1993
(73) Proprietor: Kalmar Industries Sverige AB, 341 81 Ljungby (SE)
(72) Inventor: Forsström, Nils-Erik, S-871 42 Härnösand (SE); Lundgren, Staffan, S-871 61 Härnösand (SE)
(74) Representative: Boecker, Joachim, Dr.-Ing.

(56) References cited:
- EP-A- 0 044 733
- EP-A- 0 053 429
- FR-A- 2 454 397
- US-A- 3 756 337
- US-A- 3 991 846
- PATENT ABSTRACTS OF JAPAN vol. 12, no. 392 (M-755) 19 October 1988 & JP-A-63 141 878 ( JIDOSHA KIKI ) 14 June 1988
- PATENT ABSTRACTS OF JAPAN vol. 11, no. 235 (M-612) 31 July 1987 & JP-A-62 046 766 ( MAZDA MOTORS ) 28 February 1987

## Description

The invention relates to a hydraulic servo unit, primarily for the steering mechanism of a vehicle, according to the precharacterising part of claim 1. Such a servo unit is known from the GB-A-2 188 295.

According to the state of the art, hydraulic servo units of said kind are designed such that a change in the position of the operating member results in a proportional change of an executive device. The operating member in question may be the steering wheel of a vehicle, a lever, a shuttle, and the like, and the executive device may be a steering cylinder.

As an example of a field in which a servo unit according to the invention may be used and an example of the state of the art within the field in question, an application in connection with the control of a vehicle may be suitable. Such a control normally comprises a servo system in which pressure oil is passed via a hose system and a steering unit to a steering cylinder which brings about a turn of the guide wheels corresponding to the turn of the steering wheel. The relationship between the turn of the steering wheel and the turn of the guide wheels is determined by the dimensioning of the steering unit, the length of stroke of the steering cylinder, etc. As an example, the steering wheel, from an initial position with the guide wheels parallel to the longitudinal axis of the vehicle, may need to be turned +/- two turns for the guide wheels to be turned from the maximum position in one direction to the maximum position in the other direction.

In a hydraulic servo system for electrically-driven vehicles according to the state of the art, the battery of the vehicle drives in an uncontrolled manner an electric motor connected to a hydraulic pump. This means that the speeds of the motor and of the pump are determined by the voltage of the battery and the load against which the pump is currently working. Disregarding the load variations, this means a practically constant hydraulic flow independently on whether the steering wheel and the guide wheels are to be turned or not. In case of a constant steering wheel position (angle), the constant flow will thus circulate via the pump and the oil tank of the vehicle without being of any use. When the steering wheel is turned in order to turn the vehicle, a steering unit mounted on the steering column is influenced in such a way that an internal circular slide shuts off the free circulation of the pressure oil and conducts the in-flowing oil to one of the sides of a measuring pump. Since the quantity of oil fed forward by the measuring pump is constant, its rotor when rotating transports a carefully measured oil quantity to the steering cylinder. The rotor of the measuring pump is fixed to an external circular slide of the steering unit, which means that when the rotor rotates also the external circular slide will rotate. When the rotor has rotated to the same extent as the steering wheel, the circular slide will shut off the oil flow to the measuring pump. In this way the quantity of fluid corresponding to the turn of the steering wheel is very accurately determined. The return oil coming from the steering cylinder is guided back to the oil tank by the circular slide via its own channels.

A control and servo system as described above means that the turning rate of the guide wheels is always the same independently of the extent of the deflection and the velocity of movement of the steering wheel. The turning rate of the guide wheels is determined by the dimensioning of the parts included. Because the hydraulic pump always runs at a more or less constant speed, this prior design also entails considerable power losses and drainage of the capacity of the battery, resulting in reduced time between chargings, overhauls, etc.

From the point of view of driving, it would be desirable to have a control device which allows a guide wheel turning rate corresponding to the turning rate of the steering wheel. This is due to the fact that currently used vehicles sometimes need to be turned both rapidly and with a small turning radius.

When a steering wheel is turned to bring about a turning movement of the guide wheels or when a lever is pushed to bring about a linear movement of a piston, according to the above described state of art a need of a certain amount of flow arises, which is to be supplied to a steering unit such that the turning of the guide wheels corresponds to the turning of the steering wheel, and a displacement of the piston corresponds to the change in the position of the lever, respectively. Now, if this flow, as described above, is supplied at a constant rate, the turning movement of the guide wheels and the linear movement of the piston will take place at a constant rate.

The JP-A-63219479 discloses a hydraulic servo unit which under standard conditions operates in the same way as the prior hydraulic servo unit described above. The servo unit is provided with an additional feature according to which in case that the turning rate of the operating member exceeds a standard value an additional driving signal is fed to the drive motor for the pump, this signal being allegedly dependent on the amount of the turning rate of the operating member.

GB-A-2 188 295 describes a hydraulic servo unit in which the speed of the motor which drives the hydraulic pump is made dependent on the angular velocity of the steering column. For that reason the angular velocity is sensed by a sensor and the sensed signal is used via a signal former and an amplifier to supply the electric drive motor of the pump. How ever, the dependence of the motor speed on the angular velocity of the steering column is considerably impaired by changes in the viscosity of the hydraulic fluid (oil).

US-A-4 392 540 describes a hydraulic servo unit in which the speed of the hydraulic pump is made dependant on the speed of the vehicle. The idea is to provide large hydraulic assistance when the vehicle is parked or operates at low speed to overcome higher resistance of the steering column under these operating conditions and to decrease the speed of the pump at higher speeds of the vehicle. For that purpose the speed of the vehicle is sensed and a corresponding speed of the hydraulic pump is applied if the steering column delivers a switching signal upon being moved. Further, it is made sure that the pump will always run at a low standby speed also when the steering column is not rotated.

The invention aims at providing a hydraulic servo unit of the above-mentioned kind, which is capable of operating with an unambiguous, for example proportional, relationship between the velocity of the rotational or linear movement of said operating member of the servo unit and the rate of flow of the servo unit, which relationship is not, for example, affected by changes in the viscosity of the hydraulic oil or the voltage of a supplying battery.

To achieve this aim the invention suggests a hydraulic servo unit according to the introductory part of claim 1, which is characterized by the features of the characterizing part of claim 1.

Further developments of the invention are characterized by the features of the additional claims.

According to the invention, in addition to having a given relationship between the turning of, for example, the steering wheel of a vehicle and the turning of the guide wheels, it is also possible to make the turning of the guide wheels occur at a turning rate which corresponds to the turning rate of the steering wheel or the rate of change of a lever. A condition for this is that the turning rate of the steering wheel or the liner moving rate of the lever is known. By applying a turning rate sensor on the steering column and allowing the speed value thus obtained to be transformed into a reference value for a speed control of the pump motor, the rate of the flow supplied to the steering unit will correspond to the turning rate of the steering wheel. The actual value of the speed control may be obtained in a conventional manner via a speed sensor connected to the hydraulic pump or its drive motor. By mounting a speed sensor on a lever, the corresponding control may be applied also in this case. By supplying a measured value of the speed of the drive motor to the controller the exact relationship between the angular velocity of the steering column and the speed of the hydraulic pump is not impaired by changes in the viscosity of the oil due , for example, to temperature changes.

As indicated above, the invention need not necessarily be associated with the movement of a steering wheel or a lever. The principle can always be applied where there is a need for a clear relationship between the velocity of movement of a member and a flow rate proportional to that velocity of movement.

If the invention is used for a vehicle, the latter need not, of course, be electrically driven.

In principle, the hydraulic pump could be stationary in case of a constant deflection of the steering wheel. To avoid the slip which always arises upon start-up and acceleration of the pump motor, the speed control, also in case of a constant deflection of the steering wheel, is given a certain speed reference value corresponding to a minimum no-load speed.

The invention entails a considerable energy saving since the hydraulic pump at a constant steering wheel deflection will only run at the no-load speed. This also entails for an electric vehicle a longer running time between battery chargings and a shorter charging time. A manner of driving according to the invention also means that the wear on movable and rotating parts is considerably reduced. The controlled speed also means that the flow at a certain turning rate will always be the same independent of load and battery voltage.

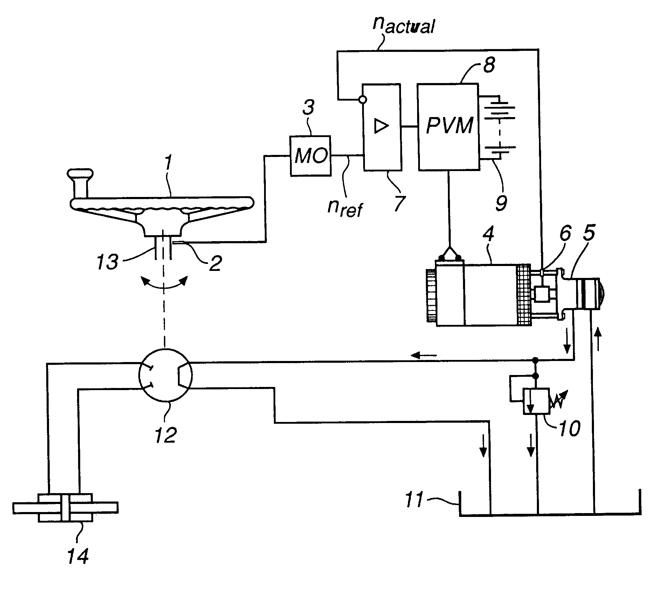

In order to show in a simple and clear manner how a hydraulic servo unit according to the invention can be utilized, an embodiment will be described in which the servo unit is used for steering a vehicle according to the accompanying drawing:

When the steering wheel 1 is turned, the turning rate is measured by a sensor 2. The sensor may, for example, be an inductive sensor which generates a pulse train with a frequency corresponding to the turning rate. The measured value obtained is converted in a convertor 3 into a suitable reference value signal n_{ref} for a hydraulic pump 5 which is driven by a speed-controlled motor 4. The speed control otherwise comprises a measuring means 6 for supplying the actual value n_{actual} of the motor. The reference and actual values are supplied to a speed regulator 7 which controls the executive device 8 feeding the motor. The energy source for driving the motor is suitably the electric battery 9 of the vehicle. How the control is performed by means of the executive device is, per se, irrelevant and can occur in many different ways. One appropriate method is the use of a pulse-width modulated transistorized control device PVM.

A simplified flow chart for the hydraulic system is also shown in the figure. When a constant steering wheel deflection is used, that is, when the rate of change is zero, the motor runs at minimum no-load speed corresponding to an n_{refmin} which, for example, can be generated by the measured value convertor 3 to be ready when the steering wheel is to be turned. The oil which is thereby fed forward is conducted via a pressure relief valve 10 back to an oil tank 11. When the steering wheel deflection is changed, a speed reference value for the pump motor 4 is obtained from the speed sensor 2. The hydraulic pump 5, via the oil tank and a steering unit 12 on the steering column 13, supplies the steering cylinder 14 with the necessary pressure oil for movement of the piston of the steering cylinder to an extent necessary for the turning of the guide wheels to correspond to the turning of the steering wheel. When moving the piston of the steering cylinder 14, a certain quantity of oil will flow into one side of the piston and a corresponding quantity of oil will be discharged from the other side of the piston and be led back, via the steering unit, to the oil tank 11.

## Claims

1. Hydraulic servo unit with a proportional relationship between a change in position of the operating member (1) and the thereby induced change in position of the executive device (14) of the servo unit,
- with the servo unit comprising a hydraulic pump (5), which is connected to a drive motor (4),
- with said pump (5), via a steering unit (12), supplying the executive device (14) with a flow at a rate corresponding to the velocity of movement of the operating member (1),
- and with a sensor (2) for the velocity of movement of said operating member (1), the sensed velocity value serving as speed reference value n_{ref} for said drive motor (4),
**characterized** in
- that a speed sensor (6) for sensing the actual speed n_{actual} of the drive motor is connected to the hydraulic pump or the drive motor,
- that the actual speed value n_{actual} and the speed reference value n_{ref} are connected to a speed regulator (7) which controls the executive device (8) feeding the drive motor, thus creating a closed-loop control for the speed of the drive motor,
- and that a minimum no-load speed reference value n_{refmin} is provided even if the velocity of movement of said operating member is zero.

2. Servo unit according to claim 1, **characterized** in that it is used for a vehicle said operating member (1) being formed as the steering wheel of the vehicle and said executive device (14) being formed as a steering cylinder for the guide wheels of the vehicle.

3. Servo unit according to claim 2, **characterized** in that the vehicle is electrically driven.

4. Servo unit according to any of the preceding claims, **characterized** in that the drive motor (4) for the hydraulic pump (5) is an electric motor.

5. Servo unit according to any of the preceding claims, **characterized** in that said operating member (1) is formed as a lever.

## Patentansprüche

1. Hydraulische Servoeinheit mit einer proportionalen Beziehung zwischen einer Änderung der Lage des Betätigungsgliedes (1) und der dadurch bewirkten Änderung der Lage des Stellgliedes (14) der Servoeinheit,
- wobei zu der Servoeinheit eine hydraulische Pumpe (5) gehört, die an einen Antriebsmotor (4) angeschlossen ist,
- wobei die genannte Pumpe (5) über eine Steuereinheit (12) die Servoeinheit (14) mit einem Fluß mit einer Geschwindigkeit versorgt, welche der Geschwindigkeit der Bewegung des Betätigungsglieds (1) entspricht,
- und mit einem Sensor (2) für die Geschwindigkeit der Bewegung des genannten Betätigungsglieds (1), wobei der gemessene Geschwindigkeitwert als Drehzahlsollwert n_{ref} für den genannten Antriebsmotor (4) dient,
**dadurch gekennzeichnet**,
daß ein Geschwindigkeitsensor (6) zur Messung der Istdrehzahl n_{actual} des Antriebsmotors an die hydraulische Pumpe oder den Antriebsmotor angeschlossen ist,
daß der Istwert der Drehzahl n_{actual} und der Drehzahlsollwert n_{ref} an einen Drehzahlregler (7) angeschlossen sind, welcher das Stellglied (8), welches den Antriebsmotor speist, steuert, wodurch eine Regelung mit geschlossenem Regelkreis für die Drehzahl des Antriebsmotors geschaffen wird,
und daß ein miminaler Drehzahlsollwert n_{refmin} bei fehlender Last selbst dann bereitgestellt wird, wenn die Geschwindigkeit der Bewegung des genannten Betätigungsglieds Null ist.

2. Servoeinheit nach Anspruch 1, **dadurch gekennzeichnet**, daß sie für ein Fahrzeug verwendet wird, wobei das genannte Betätigungsglied (1) von dem Steuerrad des Fahrzeugs gebildet wird und das genannten Stellglied (14) von einem Steuerzylinder für die lenkbaren Räder des Fahrzeugs gebildet wird.

3. Servoeinheit nach Anspruch 2, **dadurch gekennzeichnet**, daß das Fahrzeug elektrisch angetrieben wird.

4. Servoeinheit nach einem der vorhergehenden Ansprüche, **dadurch gekennzeichnet**, daß der Antriebsmotor (4) für die hydraulische Pumpe (5) ein elektrischer Motor ist.

5. Servoeinheit nach einem der vorhergehenden Ansprüche, **dadurch gekennzeichnet**, daß das genannten Betätigungsglied (1) als ein Hebel ausgebildet ist.

## Revendications

1. Servomécanisme hydraulique ayant une relation de proportionnalité entre une modification de la position de l'élément (1) de commande et la modification ainsi induite de la position du dispositif (14) d'actionnement du servomécanisme,
- le servomécanisme comportant une pompe (5) hydraulique, qui est relié à un moteur (4) d'entraînement,
- la pompe (5), par l'intermédiaire d'une unité (12) de guidage, alimentant le dispositif (14) d'actionnement en un courant à un débit correspondant à la vitesse de déplacement de l'élément (1) de commande,
- et comportant un capteur (2) pour la vitesse de déplacement de l'élément (1) de commande, la valeur de la vitesse détectée servant de valeur n_{ref} de référence de vitesse pour le moteur (4) d'entraînement,
caractérisé en ce que
- un capteur (6) de vitesse destiné à détecter la vitesse n_{actual} réelle du moteur d'entraînement est relié à la pompe hydraulique ou au moteur d'entraînement,
- la valeur n_{actual} de la vitesse réelle et la valeur n_{ref} de référence de vitesse sont envoyées à un régulateur (7) de vitesse, qui commande le dispositif (8) d'actionnement alimentant le moteur d'entraînement, créant ainsi une commande en boucle fermée pour la vitesse du moteur d'entraînement.
- et une valeur n_{refmin} minimale de référence de vitesse sans charge minimale est fournie mème si la vitesse de déplacement de l'élément de commande est nulle.

2. Servomécanisme suivant la revendication 1, caractérisé en ce qu'il est utilisé pour un véhicule, l'élément (1) de commande étant le volant de direction du véhicule et le dispositif (14) d'actionnement étant un cylindre de direction pour les roues de guidage du véhicule.

3. Servomécanisme suivant la revendication 2, caractérisé en ce que le véhicule est entraîné de manière électrique.

4. Servomécanisme suivant l'une quelconque des revendications précédentes, caractérisé en ce que le moteur (4) d'entraînement pour la pompe (5) hydraulique est un moteur électrique.

5. Servomécanisme suivant l'une quelconque des revendications précédentes, caractérisé en ce que l'élément (1) de commande est un levier.
